Europäisches Patentamt

European Patent Office

Office européen des brevets

(19)

(11) Veröffentlichungsnummer : **0 432 182 B1**

(12) **EUROPÄISCHE PATENTSCHRIFT**

(45) Veröffentlichungstag der Patentschrift :
**11.11.92 Patentblatt 92/46**

(51) Int. Cl.⁵ : **G01P 15/08**

(21) Anmeldenummer : **89909167.2**

(22) Anmeldetag : **23.08.89**

(86) Internationale Anmeldenummer :
**PCT/DE89/00549**

(87) Internationale Veröffentlichungsnummer :
**WO 90/02952 22.03.90 Gazette 90/07**

(54) **AUSWERTEVERFAHREN FÜR SENSORAUSGANGSSIGNALE.**

(30) Priorität : **02.09.88 DE 3829784**

(43) Veröffentlichungstag der Anmeldung :
**19.06.91 Patentblatt 91/25**

(45) Bekanntmachung des Hinweises auf die
Patenterteilung :
**11.11.92 Patentblatt 92/46**

(84) Benannte Vertragsstaaten :
**DE FR GB SE**

(56) Entgegenhaltungen :
**US-A- 3 703 300**
**US-A- 3 758 131**
**US-A- 3 922 001**

(73) Patentinhaber : **ROBERT BOSCH GMBH**
**Postfach 30 02 20**
**W-7000 Stuttgart 30 (DE)**

(72) Erfinder : **NITSCHKE, Werner**
**Rosseger Weg 14**
**W-7257 Ditzingen 1 (DE)**
Erfinder : **DROBNY, Wolfgang**
**Flurweg 5**
**W-7122 Besigheim (DE)**
Erfinder : **WELLER, Hugo**
**Moerikestrasse 5**
**W-7141 Oberriexingen (DE)**
Erfinder : **TAUFER, Peter**
**Talstrasse 45**
**W-7253 Renningen 2 (DE)**

EP 0 432 182 B1

## Beschreibung

### Stand der Technik

Die Erfindung geht aus von einem Auswerteverfahren für Ausgangssignale eines Sensors nach der Gattung des Hauptanspruchs.

Aus der US-A- 3 701 903 ist ein Auswerteverfahren für Ausgangssignale eines beschleunigungsempfindlichen Sensors bei Rückhaltesystemen für Fahrzeuginsassen bekannt, bei dem die Sensorausgangssignale nach einer Amplitudenbegrenzung aufintegriert werden und eine Endstufe auslösen, wenn der aufintegrierte Wert einen Schwellwert überschreitet.

### Vorteile der Erfindung

Das erfindungsgemäße Verfahren mit den kennzeichnenden Merkmalen des Anspruchs 1 hat den Vorteil, daß sehr große Datenmengen zuverlässig erfaßt und verarbeitet werden können und daß bei Vermeiden von Fehlauslösungen eine zuverlässige und rechtzeitige Aktivierung der Rückhaltesysteme im Notfall erfolgt.

Durch die in den Unteransprüchen aufgeführten Merkmale sind vorteilhafte Weiterbildungen und Ausgestaltungen des in Anspruch 1 genannten Verfahrens möglich.

### Zeichnung

Ausführungsbeispiele der Erfindung sind in der Zeichnung dargestellt und in der nachfolgenden Beschreibung näher erläutert. Es zeigen Figur 1 ein Blockschaltbild eines Rückhaltesystems für Fahrzeuginsassen zur Durchführung des erfindungsgemäßen Verfahrens, Figur 2 ein erstes Impulsdiagramm, Figur 3 ein zweites Impulsdiagramm, Figur 4, Figur 5 und Figur 6 graphische Darstellungen des Sensorausgangssignals als Funktion der Zeit, Figur 7, Figur 8 und Figur 9 Ablaufdiagramme zur Verdeutlichung des Verfahrensablaufs bei verschiedenen busführungsbeispielen der Erfindung.

### Beschreibung der Ausführungsbeispiele

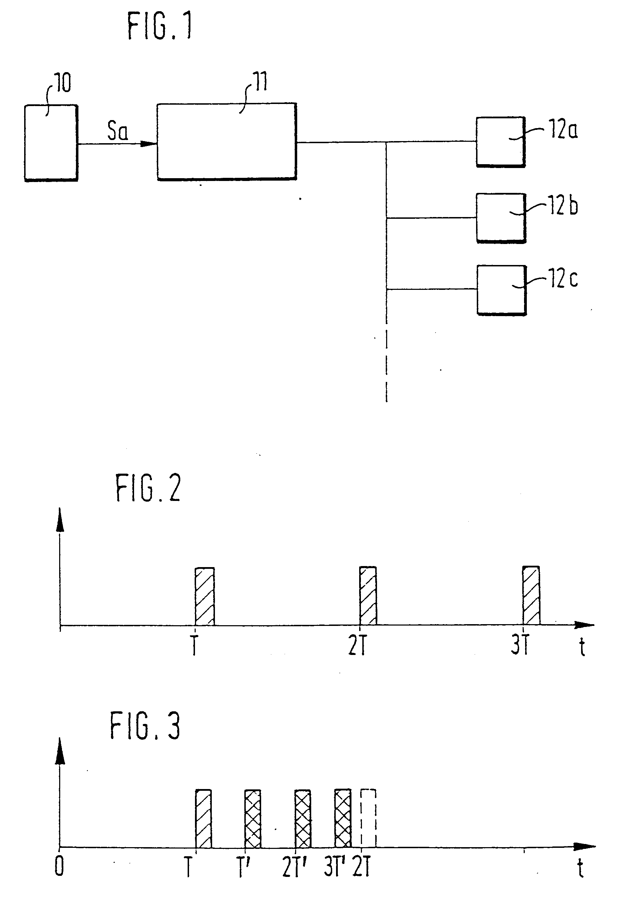

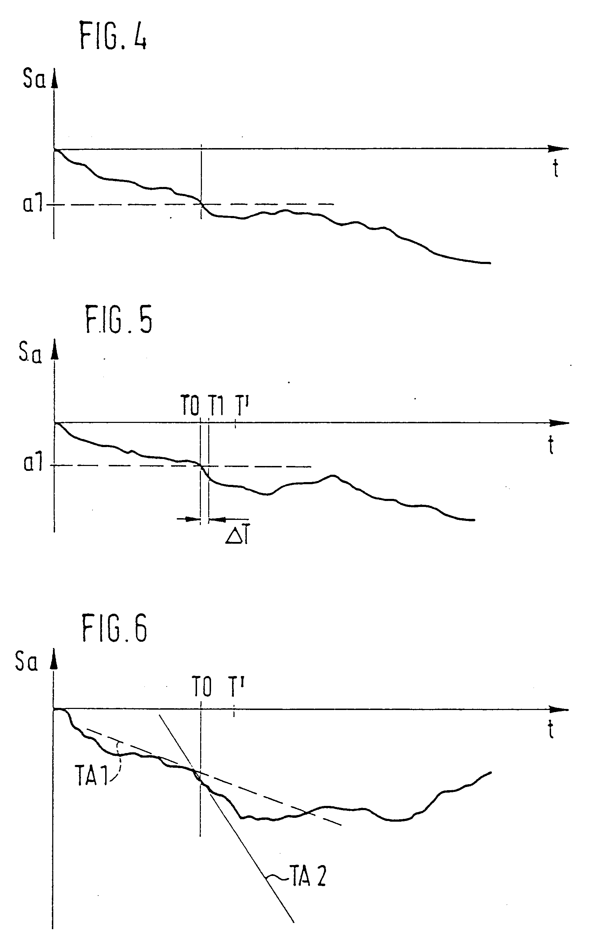

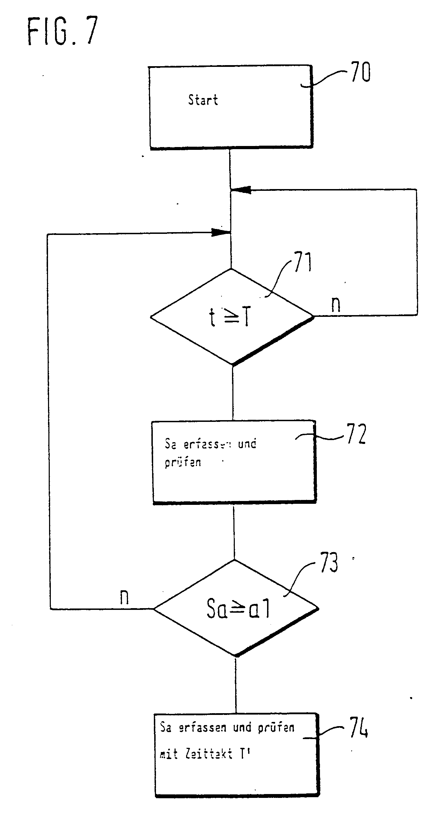

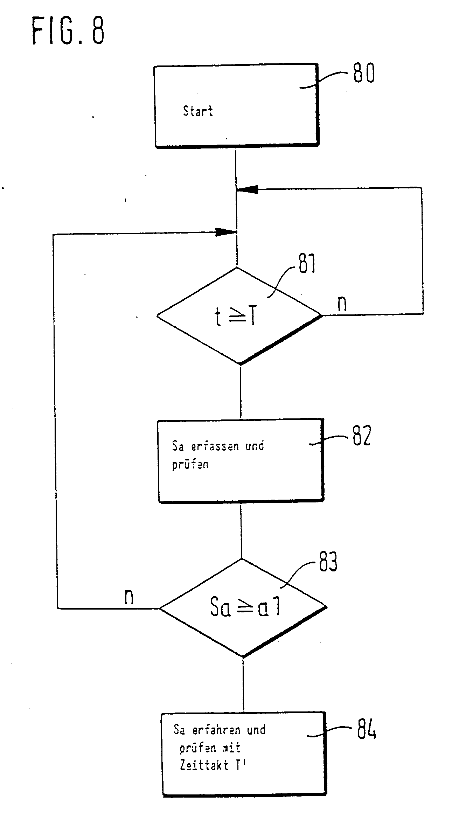

Ein Blockschaltbild eines Rückhaltesystems für Fahrzeuginsassen ist in Figur 1 dargestellt. Das Rückhaltesystem umfaßt mindestens einen beschleunigungsempfindlichen Sensor 10, der mit einer Auswerteschaltung 11 zur Erfassung und Auswertung des vom Sensor 10 abgegebenen Ausgangssignals Sa verbunden ist. Mit dem Ausgang der Auswerteschaltung 11 sind mehrere Rückhaltemittel 12a, 12b, 12c verbunden, bei denen es sich um aufblasbare Gassäcke (Airbag) und/oder Gurtstraffer handeln kann. Bei Einwirkung einer Beschleunigung auf das Fahrzeug gibt der beschleunigungsempfindliche Sensor 10 ein vorzugsweise beschleunigungsproportionales Ausgangssignal Sa ab, das von der Auswerteschaltung 11 erfaßt und ausgewertet wird, um festzustellen, ob eine Unfallsituation vorliegt. Eine Unfallsituation (Crash), die den Fahrzeuginsassen gefährlich werden könnte, kündigt sich beispielsweise dadurch an, daß die auf das Fahrzeug einwirkende Beschleunigung einen bestimmten Grenzwert überschreitet. Wenn die Auswerteschaltung 11 durch Auswertung des Ausgangssignals Sa des Sensors 10 eine solche Unfallsituation erkennt, werden von ihr die Rückhaltemittel 12a, 12b, 12c aktiviert, um die Fahrzeuginsassen zu schützen. Auswerteschaltungen 11 nach dem neuesten Entwicklungsstand umfassen digitale Signalverarbeitungsmittel, z.B. Digitalrechner, die das vom Sensor 10 abgegebene, in analoger Form vorliegende Ausgangssignal Sa nach Umwandlung in digitale Form weiterverarbeiten. Da bei der Signalverarbeitung außerordentlich große Datenmengen anfallen, aber nur ein Rechner begrenzter Leistungsfähigkeit zur Verfügung steht ist es zweckmäßig, die Ausgangssignale Sa des Sensors 10 nicht kontinuierlich, sondern nur nach relativ langen Zeitintervallen T, 2T, 3T zu erfassen und weiterzuverarbeiten. Dabei kann ein großer Teil der vorhandenen Rechnerkapazität ausschließlich für die Erfassung und Auswertung der Sensorausgangssignale Sa bereitgestellt werden, während in den dazwischenliegenden Zeiträumen, in denen also kein Sensorsignal ausgewertet wird, die freie Rechnerkapazität für andere Zwecke, beispielsweise für die Überpüfung aller Komponenten des Rückhaltesystems, zur Verfügung steht. Diese Arbeitsweise ist charakteristisch für einen unkritischen Betriebszustand des Rückhaltesystems , bei dem keine Notfallsituation vorliegt. Diese Arbeitsweise ist schematisch durch den in Figur 2 dargestellten Impulsplan erläutert. Jeweils nach Ablauf eines relativ langen Zeitintervalls T, 2T, 3T wird ein Erfassungs- und Auswertungsvorgang des Sensorausgangssignals Sa durchgeführt, der eine gewisse Zeit andauert, die durch die schraffierten Balken des Impulsdiagramms angedeutet ist. In den nicht von den schraffierten Balken belegten Zeitintervallen steht die gesamte Rechnerkapazität für andere Zwecke zur Verfügung. Sobald nun aber bei der Auswertung des Sensorausgangssignals Sa anhand von nachfolgend noch weiter erläuterten Kenngrößen auf einen kritischen Betriebszustand des Rückhaltesystems, d.h. auf eine zu einem Unfall führende notfallsituation zu schließen ist, werden Erfassung und Auswertung des Sensorausgangssignals Sa in kürzeren Zeitintervallen T', 2T', 3T' durchgeführt, um möglichst aktuelle Daten des sich ankündigenden Unfallgeschehens verwerten zu können. Hierdurch wird dafür gesorgt, daß die vorhandene Rechnerkapazität im Vergleich zur Normalsituation in verstärktem Umfang zur Auswertung der Sensorausgangssignale Sa zur Verfügung steht. Diese Betriebsweise des Rückhaltesystems wird anhand des Impulsdiagramms der Figur 3 schematisch dargestellt. Zum Zeitpunkt t=o, beispielsweise beim Start eines mit dem Rückhaltesystem ausgerüsteten Kraftfahrzeugs werde das Rückhaltesystem in Betrieb genommen. Nach Ablauf eines ersten Zeitintervalls T, wird, genau wie in der Darstellung gemäß Figur 2, angedeutet durch einen einfach schräg schraffierten Balken, ein Erfassungs- und Auswertevorgang des Ausgangssignals Sa des Sensors 10 durchgeführt. Während dieses Auswertevorgangs wird anhand gewisser Kenngrößen erkannt, daß sich ein kritischer Betriebszustand abzeichnet und ein Unfallvorgang droht. Zur besseren Erfassung und Auswertung der für die Auslösemittel 12a, 12b, 12c relevanten Ausgangssignale Sa des Sensors 10 wird daraufhin veranlaßt, daß diese Ausgangssignale Sa in zweiten, kürzeren Zeitintervallen T', 2T', 3T' erfaßt und ausgewertet werden. Die Auswertungszeiten nach diesen kürzeren Intervallen sind durch die doppeltschraffierten Balken des Impulsdiagramms der Figur 3 gekennzeichnet. In einem ersten Ausführungsbeispiel der Erfindung wird gemäß Figur 4 der Zeichnung als kritische Kenngröße die Amplitude des Ausgangssignals Sa des Sensors 10 ausgewertet. Wenn beispielsweise anläßlich der nach dem Zeitintervall T ablaufenden Erfassung und Auswertung des Sensorausgangssignals Sa von der Auswerteschaltung 11 festgestellt wird, daß das Sensorausgangssignal Sa eine vorgebbare Amplitude al überschreitet, wird die anschließende Auswertung und Erfassung des Sensorausgangssignals Sa nach Ablauf kürzerer Zeitintervalle T', 2T', 3T' durchgeführt. Die den vorgebbaren Grenzwert al übersteigende Amplitude des Sensorausgangssignals Sa ist nämlich ein Hinweis darauf, daß eine Crashsituation vorliegt, die durch eine starke Beschleunigungsbeanspruchung des Fahrzeugs gekennzeichnet ist. Zur weiteren Erläuterung des ersten Ausführungsbeispiels der Erfindung dient das Ablaufdiagramm gemäß Figur 7. Im Ablaufschritt 70, der dem Zeitpunkt t=0 der Figur 3 entspricht, wird das Rückhaltesystem durch Inbetriebnahme des Fahrzeugs eingeschaltet. Im Ablaufschritt 71 wird ein Zeitablauf überwacht und festgestellt, ob das Ende des Zeitintervalls T erreicht ist. Bei Erreichen von T beginnt die Erfassung und Auswertung des Sensorausgangssignals Sa (Schritt 72). Wenn dabei im Schritt 73 festgestellt wird, daß die Amplitude des Sensorausgangssignals Sa den vorgegebenen Grenzwert al überschritten hat, wird die Erfassung und Auswertung nach Ablauf kürzerer Zeittakte T', 2T', 3T' durchgeführt (Schritt 74). Hierbei kann es allerdings vorkommen, daß infolge nur einer kurzzeitig andauernden Störung die Amplitude des Sensorausgangssignals Sa den Grenzwert al übersteigt, obwohl keine notfallsituation vorliegt. Diese nachteilige Situation wird mit einem zweiten Ausführungsbeispiel der Erfindung bewältigt, das in folgendem unter Bezugnahme auf Figur 5 und das Ablaufdiagramm von Figur 8 beschrieben wird.

Figur 5 zeigt wiederum die Darstellung des Sensorausgangssignals Sa als Funktion der Zeit t. Es ist wiederum ein Grenzwert al vorgegeben und bei der Erfassung und Auswertung des Sensorausgangssignals Sa, die zum Zeitpunkt T beginnt, wird festgestellt, ob die Amplitude des Sensorausgangssignals Sa diesen Grenzwert al überschreitet. Im Diagramm nach Figur 5 wird der Grenzwert al zum Zeitpunkt T0 überschritten. Dieses weitere Ausführungsbeispiel der Erfindung begnügt sich nun nicht ausschließlich mit der Überwachung der Amplitude des Sensorausgangssignals Sa und der Überprüfung, ob die Amplitude dieses Signals den Grenzwert al überschreitet, sondern sieht eine zusätzliche Zeitüberwachung vor und überprüft, ob die Überschreitung des Grenzwertes al mindestens für ein Zeitintervall Δ T:T0-T1, das also zum Zeitpunkt T0 beginnt, andauert. Erst wenn dies der Fall ist, wenn also die Amplitude des Sensorausgangssignals Sa den Grenzwert al länger als das vorgebbare Zeitintervall ΔT überschreitet, wird die Erfassung und Auswertung des Sensorausgangssignals Sa in kürzeren Zeitabständen T', 2T', 3T' durchgeführt. Auf diese Weise wird sichergestellt, daß kurzzeitige, eher zufällige Überschreitungen des Grenzwerts al durch die Amplitude des Sensorausgangssignals Sa nicht zu einer Änderung des normalen Auswerteablaufs führen. Der Verfahrensablauf bei diesem zweiten Ausführungsbeispiel ergibt sich auch aus den in Figur 8 dargestellten Ablaufschritten 80 bis 84.

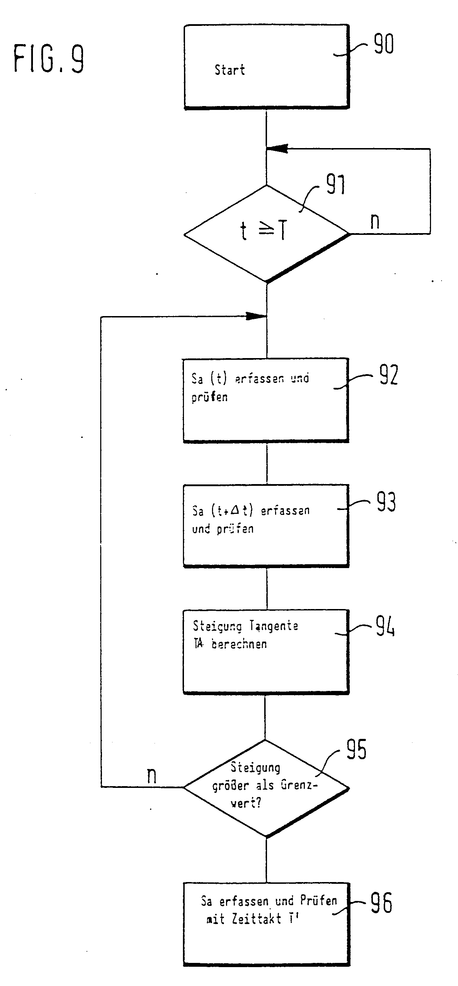

In einem weiteren Ausführungsbeispiel der Erfindung wird bei der Erfassung und Auswertung des Sensorausgangssignals Sa überprüft, ob die Steigung der Tangente TA1, TA2 an den Kurvenverlauf des Sensorausgangssignals Sa einen vorgebbaren Grenzwert überschreitet (Figur 6, Figur 9). Eine steil verlaufende tangente deutet auf eine schnelle Amplitudenänderung des Ausgangssignals Sa des Sensors 10 hin und läßt einen Trend zur Amplitudenvergrößerung erkennen, der ein Anzeichen für eine starke Beschleunigungsbeanspruchung des Fahrzeugs ist. Aus der Darstellung der Figur 6 geht hervor, daß zum Zeitpunkt T0 die an den Kurvenverlauf des Sensorausgangssignals Sa gelegte tangente TA2 wesentlich steiler verläuft, also eine größere Steigung hat, als die zu einem früheren Zeitpunkt an die Kurve Sa gelegte Tangente TA1. Da die Steigung der Tangente TA2 einen vorgegebenen Grenzwert übersteigt, wird auf das Vorhandensein eines kritischen Betriebszustands geschlossen und die Erfassung und Auswertung des Sensorausgangssignals Sa in kürzeren Zeitintervallen T', 2T', 3T' (vgl. Figur 3) durchgeführt. Wie aus dem Ablaufplan der Figur 9 hervorgeht, der dieses dritte Ausführungsbeispiel erläutert, kann die Steigung der Tangente TA auf relativ einfache Weise nach bekannten mathematischen Methoden durch Bildung des Differenzenquotienten ermittelt werden, indem die Differenz zeitlich aufeinanderfolgender Funktionswerte des Sensorausgangssignals Sa durch die Differenz der zugeordneten Abszissenwerte (Zeit t) dividiert wird.

Falls erforderlich, kann in weiteren komplexeren Ausführungsbeispielen der Erfindung eine Kombination der zuvor beschriebenen Kenngrößen gewählt werden, um ein Kriterium für den Wechsel des Erfassungs- und Auswertungsintervalls des Sensorausgangssignals Sa zu finden.

## Patentansprüche

1. Auswerteverfahren für Ausgangssignale eines beschleunigungsempfindlichen Sensors bei Rückhaltesystemen für Fahrzeuginsassen, dadurch gekennzeichnet, daß die Ausgangssignale (Sa) des Sensors (10) periodisch erfaßt und ausgewertet werden, wobei die Erfassung und Auswertung der Ausgangssignale (Sa) in einem unkritischen Betriebszustand jeweils nach Ablauf eines ersten Zeitintervalls (T, 2T, 3T ...) von vorbestimmter Länge und in Abhängigkeit von auf einen kritischen Betriebszustand hindeutenden Kenngrößen jeweils schon nach Ablauf eines zweiten, kürzeren Zeitintervalls (T′, 2T′, 3T′) von vorbestimmter Länge durchgeführt werden.

2. Verfahren nach Anspruch 1, dadurch gekennzeichnet, daß die Erfassung und Auswertung der Ausgangssignals (Sa) dann in kürzeren Zeitintervallen (T′, 2T′, 3T′, ...) durchgeführt werden, wenn die Amplitude des Ausgangssignals (Sa) des Sensors (10) einen vorgebbaren Grenzwert (a1) überschreitet.

3. Verfahren nach einem der Ansprüche 1 und 2, dadurch gekennzeichnet, daß die Erfassung und Auswertung der Ausgangssignale (Sa) des Sensors (10) dann in kürzeren Zeitintervallen (T′, 2T′, 3T′, ...) durchgeführt werden, wenn die Amplitude des Ausgangssignals (Sa) des Sensors (10) einen vorgebbaren Grenzwert (a1) während eines vorgebbaren Zeitintervalls (T1-T0=ΔT) überschreitet.

4. Verfahren nach einem der Ansprüche 1 bis 3, dadurch gekennzeichnet, daß die Erfassung und Auswertung des Ausgangssignals (Sa) des Sensors (10) dann in kürzeren Zeitintervallen (T′, 2T′, 3T′, ...) durchführt werden, wenn die Steigung der Tangente (TA1, TA2) an die Kurve des Ausgangssignales (Sa) des Sensors (10) einen vorgebbaren Grenzwert überschreitet.

## Claims

1. Method for evaluating output signals of an acceleration-sensitive sensor in restraining systems for vehicle passengers, characterised in that the output signals (Sa) of the sensor (10) are periodically detected and evaluated, the detection and evaluation of the output signals (Sa) in each case being carried out after a first time interval (T, 2T, 3T ...) of predetermined length has elapsed in an uncritical operating state and in each case already being carried out after a second, shorter time interval (T′, 2T′, 3T′) of predetermined length has elapsed in dependence on characteristics indicating a critical operating state.

2. Method according to Claim 1, characterised in that the detection and evaluation of the output signal (Sa) are carried out in shorter time intervals (T′, 2T′, 3T′, ...) when the amplitude of the output signal (Sa) of the sensor (10) exceeds a predeterminable limit value (a1).

3. Method according to one of Claims 1 and 2, characterised in that the detection and evaluation of the output signals (Sa) of the sensor (10) are carried out in shorter time intervals (T′, 2T′, 3T′, ...) when the amplitude of the output signal (Sa) of the sensor (10) exceeds a predeterminable limit value (a1) during a predeterminable time interval (T1-T0=ΔT).

4. Method according to one of Claims 1 to 3, characterised in that the detection and evaluation of the output signal (Sa) of the sensor (10) are carried out in shorter time intervals (T′, 2T′, 3T′, ...) when the slope of the tangent (TA1, TA2) at the curve of the output signal (Sa) of the sensor (10) exceeds a predeterminable limit value.

## Revendications

1. Procédé d'exploitation des signaux de sortie d'un détecteur sensible aux accélérations dans des systèmes de retenue des passagers d'un véhicule, procédé caractérisé en ce que les signaux de sortie (Sa) du détecteur (10) sont détectés et exploités périodiquement, la détection et l'exploitation des signaux de sortie (Sa) étant effectuées quand on est dans un état de marche non critique à des intervalles de temps (T, 2T, 3T), selon un premier déroulement, d'une longueur prédéterminée et en fonction de grandeurs caractéristiques indiquant un état de marche critique à des intervalles de temps plus courts (T′, 2T′, 3T′) de longueur prédéterminée, selon un deuxième déroulement.

2. Procédé selon la revendication 1, caractérisé en ce que la détection et l'exploitation du signal de sortie (Sa) est effectuée alors à des intervalles de temps plus courts (T', 2T', 3T', ...), quand l'amplitude du signal de sortie (Sa) du détecteur (10) franchit une valeur limite pouvant être prédéfinie.

3. Procédé selon l'une des revendications 1 et 2, caractérisé en ce que la détection et l'exploitation des signaux de sortie (Sa) du détecteur (10) est effectuée à des intervalles de temps plus courts (T', 2T', 3T' ...), quand l'amplitude du signal de sortie (Sa) du détecteur (10) franchit une valeur limite (al), pouvant être prédéfinie pendant un intervalle de temps pouvant être prédéfinie (T1-TO=ΔT).

4. Procédé selon l'une des revendications 1 à 3, caractérisé en ce que la détection et l'exploitation du signal de sortie (Sa) du détecteur (10) est effectuée à des intervalles de temps plus courts (T', 2T', 3T', ...), quand la pente des tangentes (TA1, TA2) et la courbe du signal de sortie (Sa) du détecteur (10) franchit une valeur limite pouvant être prédéfinie.

# FIG.1

10

11

Sa

12a

12b

12c

# FIG.2

T    2T    3T    t

# FIG.3

0    T    T'    2T'    3T' 2T    t

FIG. 4

FIG. 5

FIG. 6

FIG. 7

FIG. 8

```
                    ┌──────────────┐
                    │              │── 80
                    │    Start     │
                    │              │
                    └──────┬───────┘
                           │
              ┌────────────┼─────────────────────┐
              │            │                      │
              │        ┌───┴───┐                  │
              │       ╱  81    ╲                  │
              │      ╱           ╲     n          │
              │     ╱   t ≥ T     ╲─────────────┘
              │     ╲             ╱
              │      ╲           ╱
              │       ╲_____╱
              │            │
              │       ┌────┴─────────┐
              │       │ Sa erfassen und │── 82
              │       │ prüfen          │
              │       └────┬─────────┘
              │            │
              │        ┌───┴───┐
              │       ╱   83    ╲
         n    │      ╱           ╲
       ┌──────┘     ╱   Sa ≥ a1   ╲
                    ╲             ╱
                     ╲           ╱
                      ╲_____╱
                           │
                    ┌──────┴───────┐
                    │ Sa erfahren und │── 84
                    │   prüfen mit    │
                    │   Zeittakt T'   │
                    └──────────────┘
```

$t \geq T$

$Sa \geq a1$

Sa erfassen und prüfen

Sa erfahren und prüfen mit Zeittakt T'

FIG.9

Start ⌐ 90

t ≥ T ⌐ 91    n

Sa (t) erfassen und
prüfen ⌐ 92

Sa (t+Δt) erfassen
und prüfen ⌐ 93

Steigung Tangente
TA berechnen ⌐ 94

n    Steigung
größer als Grenzwert? ⌐ 95

Sa erfassen und Prüfen
mit Zeittakt T' ⌐ 96